# EUROPEAN PATENT SPECIFICATION

(11) **EP 2 770 034 B1**
(45) Date of publication and mention of the grant of the patent: **08.08.2018**
(21) Application number: 11822844.4
(22) Date of filing: 27.12.2011
(51) Int. Cl.: C09K 3/22, C09K 17/22, E02B 3/12

(54) **POLYMERIC COMPOSITION FOR SOIL STABILIZATION AND FOR CONTROLLING DUST AND EMBANKMENT EROSION**
POLYMERZUSAMMENSETZUNG ZUR BODENSTABILISIERUNG UND ZUR KONTROLLE VON STAUB- UND DAMMEROSION
COMPOSITION POLYMÈRE POUR LA STABILISATION DE SOLS, LA RÉDUCTION DE LA POUSSIÈRE ET DE L'ÉROSION DE TALUS

(43) Date of publication of application: 27.08.2014
(73) Proprietor: Acciona Infraestructuras, S.A., 28108 Alcobendas (Madrid) (ES); Foresa, Industrias Químicas Del Noroeste, S.A.U., 36650 Caldas de Reis (Pontevedra) (ES)
(72) Inventor: BOTELLO ROJAS, Faiver, E-28108 Alcobendas (Madrid) (ES); CASAS OCAMPO, Andrea, E-28108 Alcobendas (Madrid) (ES); GARCÍA HERMIDA, Miguel, E-36650 Caldas de Reis (Pontevedra) (ES); OTERO VÁZQUEZ, Luis Alberto, E-36650 Caldas de Reis (Pontevedra) (ES); RIAL PÉREZ, Carlos, E-36650 Caldas de Reis (Pontevedra) (ES); PRIMI, Stefano, E-28108 Alcobendas (Madrid) (ES)
(74) Representative: Elzaburu S.L.P.
(86) International application number: PCT/ES2011/070908
(87) International publication number: WO 2013/098425

(56) References cited:
- EP-A1- 2 380 927
- WO-A2-02/15687
- US-A1- 2006 128 838

## Description

### Field of the Invention

The present invention refers to a new polymer composition and its use in the stabilisation of soil, dust control and embankment erosion.

### Introduction

Stabilisation is a process aimed at improving or increasing the geotechnical properties of treated soil, mainly its resistance. On many occasions the need for carrying out this process arises because the soil found at the work site does not fulfil the technical requisites set down by the regulations for highway construction. Traditionally cement and lime have been the products that are most frequently used in this process. However, their use is restricted to soil with elevated percentages of soluble salts and / or organic material, and their application has significant environmental impact, mainly due to their production process.

The main principle that bears heavily on the loss of soil resistance, regardless of the method of stabilisation employed, is moisture, and many of the existing non-traditional products currently available are not, in the end, effective for controlling this problem. That is, even though the resistance of treated soil in dry conditions is drastically improved, in wet conditions it loses much of the resistance attained, thus becoming a high priority problem to be resolved.

Different studies which have assessed the technical and environmental viability of the use of polymer emulsions for stabilizing soil have established that these products can increase and/ or improve the mechanical properties of the soil and reduce the environmental impact caused by traditional products. However, to date their application continues to be limited to soil affected by water, and so the only alternatives available in these types of actions are limited to treatment with traditional stabilisers.

With regard to on site dust control, the traditional treatment currently used is based mainly on the constant sprinkling of water on the zones to be treated. In practice, besides generating an excessive consumption of this resource, this method requires continuous transport of a water container, which most of the time also results in higher labour costs of the project and contributes to higher CO₂ emissions. Furthermore, one of the most frequent problems that arises is the lack of availability of this resource, which in many cases makes this control of the problem unworkable. It is important to point out that the generation of dust due to vehicular traffic or wind not only minimises the visibility of the drivers, but also can affect the health of people and have a negative impact in neighbouring zones.

Furthermore the control of embankment erosion is carried out by different technical means depending on the specific needs. However, one of the most commonly repeated problems in road infrastructure work stems from the erosion of the embankments that occurs while construction of said work is ongoing. This is mainly due to the fact that many of the current existing treatments for controlling embankment erosion are focussed on being used as a permanent treatment for when the construction process is completed, as is reflected in the budget items of the project in the majority of cases. On account of there is a need to develop a new temporary and permanent treatment which likewise minimises erosion of embankments during execution of the works, can be maintained as the final treatment once the works have been finished and, should it be necessary, can be used together with current techniques.

The growing social sensibility to environmental issues, together with the commitments acquired by Spain regarding the reduction of CO₂ emissions is driving the search for alternatives and construction materials providing lower energy costs and minimal environmental impact. Bearing in mind that cement is one of the most used construction materials in Spain and is also one of the materials having high energy costs, a reduction of its consumption would consequently lead to a reduction in CO₂ emissions and improved air quality.

As a result, there are some prior art documents related to this issue. Thus, for example, in the article "Stabilisation of Earth Roads with Water-based Polymer Emulsions", by RT Bishop et al, published in Proc S Afr Sug Technol Ass (1998) 72, gives a general overview of the stabilisation of land with soil with water based polymer emulsions.

For its part, Spanish patent application ES 2 338 842 A1 discloses compositions for improving roads based on vinyl-versatate copolymers mixed with other polymers that provide elasticity, such as styrene-acrylic polymers. These compositions involve the use of styrene derivatives, such as chloro isothiazolone type biocides, and as such their respect for the environment leaves much to be desired.

Likewise patent document EP 2 380 927 A1 discloses compositions for, among other applications, the control of soil erosion, which contain styrene - butadiene latex, and so their respect for the environment once again leaves much to be desired.

Finally, patent EP 0 431 656 A1 discloses interpolymers of esters of (meth)acrylic acid and vinyl esters of branched chain carboxylic acids. These interpolymers are derived from mixtures that contain butyl acrylate and that for stabilising use compounds such as acrylic acid, methacrylic acid, acrylamide, methacrylamide, diacetone acrylamide and sodium vinyl sulfonate, which once again raise issues from the environmental standpoint.

Also, US 2006/128838 A1 discloses water-redispersible polymer powders which are sprayed on to the untreated dusty ground for the stabilization of dusting surfaces.

### Summary of the Invention

Therefore, the main objective of the invention is to provide a polymer based product that is able to stabilise soils, control dust and minimise erosion of embankments, thus making it possible to reduce their environmental footprint while at the same time demonstrating some physical and chemical properties that improve on those disclosed up until now, for example, making it possible to improve the geotechnical properties of the soil, reduce particulate material caused by vehicular traffic and the wind, and minimise water and wind erosion of the embankments.

The solution is based on the fact that the inventors have identified that, by making the adequate selection of monomers which give rise to the terpolymers being used, combined with a stabilising system for the terpolymers that provide the needed stabilisation so that the compositions adequately polymerise, it is possible to obtain compositions that satisfactorily display the above mentioned properties.

Consequently, a first aspect of the invention is directed towards the aqueous polymer compositions, which comprise:
▪ A VeoVa vinyl-acrylate terpolymer that comprises three types of monomers: methyl methacrylate, VeoVa 10, and vinyl acetate;
▪ A mixture of stabilising surfactants comprising anionic, nonionic and polymer surfactants;
▪ At least one protector colloid;
▪ At least one coalescing agent included to foment film formation; and
▪ At least one rheological agent,
having the composition specified in attached claim 1.

A second aspect of the invention is aimed at the use of said compositions in the stabilisation of soils, as well as ground dust control and the erosion of embankments.

The development of this product has been focussed towards its resistance to moisture with the aim of resolving the problems found in the current art for the treatment of soils due to this parameter. The development of a product that is capable of significantly improving the geotechnical properties of soils makes it possible to provide a technically viable solution to each of the problems described above. At the same time, its use not only enables reducing the amount of natural resources needed in road infrastructure projects, such as soil and water, but also makes it possible to provide a solution to the most frequent technical problems in projects of this type.

### Detailed description of the Invention

In a general manner the product developed deals with a water based dispersion having the following components:
▪ A VeoVa vinyl acrylate terpolymer composed of three types of monomers: methyl methacrylate, VeoVa 10 and vinyl acetate, which contribute different properties to the final product (elasticity, resistance to water and mechanical resistance in relation to the load);
▪ A mixture of stabilising surfactants comprising anionic, nonionic and polymer surfactants;
▪ At least one protector colloid;
▪ At least one coalescing agent intended to foment film formation, and
▪ At least one rheological agent, and having the composition according to claim 1.
The compositions of the invention in accordance with the above display the following advantageous features with respect to the prior art:
- The use of a vinyl-acrylate terpolymer instead of a mixture of different polymers results in a substantial improvement with respect to the mechanical properties, elasticity and resistance to water.
- It is a project that respects the environment, being free of phthalates, Alkylphenol Ethoxylates (APEO), and styrene products or chlorinated biocides
- They display an optimal multi-component terpolymer stabilisation using a mixture of anionic surfactants (stabilised monomers, leading to an optimal distribution of particle size and coagulation prevention of the terpolymer), nonionics (improve system stability against electrolytes, shear strength and freeze-thaw stability) and polymeric surfactants (improve mechanical properties, water resistance and stability), protector colloid (to improve mechanical strength) and rheological modifiers.

Thus the compositions of the invention surpass those known in the state of the art because they are able to stabilise a VeoVa vinyl acrylate terpolymer using the synergistic effect of stabilising agents that do not function without all of them in the correct proportions. The polymer composition weight in accordance with the invention is the following:

| | |
|---|---|
| VeoVa vinyl acrylate terpolymer | 30 - 65% |
| Coalescing agents: | 0.5 - 4.5 % |
| Polymer surfactants: | 0.1 - 5.0 % |
| Anionic surfactants: | 0.1 - 5.0 % |
| Nonionic surfactants: | 0.1-5.0 % |
| Protector colloid: | 0.1 - 5.0% |
| Rheological agent: | 0.4 - 5.0 % |
| Biocide | 0.1-0.5% |
| pH control agent: | 0.1-2.0% |
| Water: | 30 - 60 % |

In a preferred embodiment, with the above mentioned 30% - 65% of VeoVa vinyl acrylate terpolymer, would be comprised of the following co-monomers in percentage weight over the total composition: Vinyl acetate: 26-45%; VeoVa 10: 2-10%; Methylmethacrylate 2-10%. As defined herein, VeoVa 10 is the vinyl ester of versatic acid 10, a synthetic saturated monocarboxylic acid with a branched structure containing 10 carbon atoms, and which can also be defined as a neodecanoic acid ethenyl ester. This definition is made extensive to all references to VeoVa 10 herein, including the claims. The use of vinyl acetate as a monomer in the terpolymer provides the benefits from the ecological point of view of being a more economical and less problematic product than the monomer acrylates used in prior art.

In another preferred embodiment the polymer stabilisers are chosen from copolymers polypropylene / polyethylene glycol, such as, for example, Pluronic PE6800 or similar.

In a further preferred embodiment, the anionic stabilisers are selected from sodium salts of sulfonated alkyl chains, for example of Disponil LDBS 55 or similar.

In still another preferred embodiment, the nonionic stabilisers are selected from ethoxylated fatty alcohols such as, for example, Disponil OC 25 and Disponil A-1080 or similar.

In additional preferred embodiments the protector colloid is hydroxyethylcellulose or similar, the rheological agent is a salt derived from vinyl sulfonate or similar, the coalescing agent is trimethyl pentanediol monoisobutyrate, the biocide is a combination of BIT (benzyl isothiazolone) and MIT (methyl isothiazolone) or similar, and the pH control agent is sodium acetate or similar.

### Experimental tests

The following experimental tests were carried out in a laboratory:

**Table 1: Experimental tests of compositions for the stabilisation of soils**

| Components | Comparative Example 1 | Comparative Example 2 | Comparative Example 3 | Comparative Example 4 | Comparative Example 5 | Example in accordance with the invention |
|---|---|---|---|---|---|---|
| VeoVa 10 (%) | 5 | 5 | 5 | 5 | 5 | 5 |
| Tg (Cº) | 29 | 29 | 29 | 29 | 29 | 29 |
| Stabiliser: Anionic surfactants (%) | 0.50 | 0.50 | 0.50 | 0.50 | 0.50 | 0.50 |
| Stabiliser: Nonionic surfactants (%) | 2.10 | 2.10 | 0.00 | 2.10 | 2.10 | 2.10 |
| Stabiliser: Polymer surfactants (%) | 1.20 | 1.20 | 1.20 | 1.20 | 0.00 | 1.20 |
| Stabiliser/ colloid: hydroxyethylcellul ose (%) | 0.50 | 0.00 | 0.50 | 0.50 | 0.50 | 0.50 |
| Stabiliser/ Rheological agent: Salt derived from vinyl sulfonate (%) | 0.30 | 1.20 | 1.20 | 0.00 | 1.20 | 1.20 |
| Description of the tested stabilising system | Lower rheological agent percentage | Lack of protector colloid | Lack of nonionic surfactants | Lack of rheological agent | Lack of polymer surfactants | Stabilising system in accordance with invention |
| Aspect | Paste | Coagulant + liquid | Bright white | Paste | Bright white | Bright white |
| Viscosity at 23 Cº (cP) (Brookfield: RV 6; 20 rpm) | >150,000 | 8 | 3,530 | >150,000 | 1,700 | 4,840 |
| Density at a 23Cº, (g/cm³) | - | - | - | - | 1.084 | 1.082 |
| pH at 23Cº | 4.3 | - | 3.4 | 4.2 | 4.4 | 4.3 |
| Solids content, 105Cº 1h (%) | 54.2 | 30 | 29.1 | 54.2 | 53.7 | 53.7 |
| Time open (minutes) | - | - | 16-21 | - | 5-9 | 4-7 |
| Average particle size (µm) | 2.93 | 0.1/2.0/9.0 | 4.21 | 4.31 | 1.53 | 1.41 |
| Application aspect 350 µm s/glass | - | - | Transparent | - | Transparent | Transparent |
| Film | - | - | Brittle | - | Brittle+ | Brittle |
| Water absorption % | - | - | - | - | 37.2 | 15.6 |
| Stability, 7 days at 70Cº Viscosity (cP) | - | - | - | - | 1390 | 2210 |
| Stability, 7 days at 70Cº PSD (µm) | - | - | - | - | 1.30 | 2.2 |
| Stability, 7 days at 70Cº pH | - | - | - | - | 3.5 | 3.5 |
| Stability ice-thaw, -20/23Cº 1 cycle | - | - | | - | - | >5 cycles |
| Aspect film | - | - | Lumps | - | Lumps | Without lumps |
| Washability, number of cycles | - | - | - | - | 13800 | 20000 |
| Notes | Collapse of the emulsion | Collapse of the emulsion | Not obtained polymerisi ng | Collapse of the emulsion | Worst mechanical properties and against water | Polymerisation and end product adequate |

The above experimental tests show that the example carried out in accordance with the invention shows satisfactory properties, with an adequate polymerisation of the end product. Conversely, during the comparative tests not in line with the invention, either the emulsion collapsed or it did not polymerise.

To assess the effectiveness of the tested compositions under real conditions, the compositions in accordance with the invention were tested and applied under real conditions in different works. The manner of application and dosification of the product varied depending on the application needing to be carried out (stabilisation of soils, dust control or erosion). However, the application parameters were the same in all of the applications. The experimental tests were the following:

### Examples of application:

### - Stabilisation of soils

Application of the product was carried out in the same manner as a traditional stabilising process, which consists in:
- Scarification of the terrain
- Mixture of the product with the water required for compacting
- Spraying the product on the scarified terrain
- Mixed until a homogeneous mixture is obtained
- Compacting the stabilised terrain

The curing time depends on the type of terrain treated and air temperature, and lasts between 48 and 72 hours
The results obtained in these applications are shown in the following table:

**Table 2: Examples of application for stabilisation of soils**

| Year | Location of the works | Treatment | Improved treated soil resistance |
|---|---|---|---|
| 2010 | Alcañiz (Zone A) | Stabilisation (parking lot) | 177% |
| 2010 | Ibiza PM-804 | Stabilisation of a bike lane | 56% |
| 2010 | Playa Paraiso Cartagena | Stabilisation of a seafront promenade | 73.50% |
| 2010 | | | |
| 2011 | City of Santander | Stabilisation of a bike lane | 45% |
| 2011 | Mallorca (estate access roads) | Stabilisation of access roads | 25% |
| 2011 | Torrent | Stabilisation | 38% |
| 2011 | Baiona | Stabilisation of a bike lane | 200% |
| 2011 | Vigo | Stabilisation | 37% |
| 2011 | Baiona | Stabilisation | 37% |

As can be seen, in all of the cases the use of compositions in accordance with the invention produced a greater improvement of the resistance of the treated soil, some of the improvements being quite significant

### - Dust control

This application is characterized by its simplicity. The dosification of the product, as has been mentioned above, varied in accordance with the treatment needs and the type of soil to be treated, as this determines the dosification of water to be applied. In general, the ratio of the product dilution and water is approximately between 1:4 and 1:6, although if the soil to be treated is clayey the ratio can vary from approximately 1:3 and 1:5. Once the product and water are mixed in accordance with the above ratios, it is sprayed on the terrain to be treated homogeneously and left to cure 24 hours.

In the present case, in order to assess the efficacy of the compositions of the invention, the compositions were applied to control the dust generated on the road to the town of Minas de Santa Quiteria (Toledo). The treated section was 4,000 meters long. In order to establish the effectiveness of the compositions in accordance with the invention, the total particles in suspension (TPS) were measure at three points of the road before and after application of said compositions. The results obtained in these application applications are shown in the following table:

**Table 2: Examples of applications for controlling dust in works.**

| Points of application: | Before application | After application |
|---|---|---|
| Point 1 | | |
| Volume sampled (m³) | 115.4 | 56.7 |
| Normal volume sampled (m³) | 97.4 | 47.9 |
| Total particle mass (µg) | 61,600 | 13,300 |
| Total particle concentrations (µg/m³N) | 632 | 277 |

| Point 2 | | |
|---|---|---|
| Volume sampled (m³) | 113.7 | 55.5 |
| Normal volume sampled (m³) | 96.3 | 46.6 |
| Total particle mass (µg) | 58,400 | 13,900 |
| Total particle concentrations (µg/m³N) | 606 | 298 |

| Point 3 | | |
|---|---|---|
| Volume sampled (m³) | 89.7 | 52.4 |
| Normal volume sampled (m³) | 96.3 | 44.4 |
| Total particle mass (µg) | 71,300 | 11,800 |
| Total particle concentrations (µg/m³N) | 943 | 265.7 |

Once again the effectiveness of the tested compositions is likewise seen in this application, with the total particle concentration in suspension being a third less than the original before applying the compositions of the invention.

### - Erosion control:

As was the case in the dust control application, the product:water dilution ratio varies between 1:3 and 1:6 in accordance with the type of soil being treated. The application of the product was conducted by means of projecting the water diluted product on the embankment.

In light of the foregoing, the experimental results showed that the compositions of the present invention display:
▪ A good stability of the polymer dispersion that is transmitted to the applied element
▪ A high binding capacity (a balanced composition of the different components), creating improved compacting of the element to which it is applied
▪ Very good resistance to the atmospheric agents of the polymer dispersion, with the element to which it is applied, maintaining the properties that the polymer dispersion provides

To date these characteristics have not been obtained by any of the products currently found in the market.

## Claims

1. A water-based composition comprising:
▪ a VeoVa vinyl-acrylate terpolymer that comprises the following three types of monomers: methyl methacrylate, neodecanoic acid ethenyl ester, and vinyl acetate;
▪ a mixture of stabilising surfactants comprising anionic, nonionic and polymer surfactants;
▪ at least one protector colloid;
▪ at least one coalescing agent, intended to foment film formation; and
▪ at least one rheological agent;
**characterised by** the following composition, in %weight over the total composition:
▪ VeoVa vinyl acrylate terpolymer 30 - 65%
▪ Coalescing agents: 0.5 - 4.5 %
▪ Polymer stabilisers: 0.1 - 5.0 %
▪ Anionic stabilisers: 0.1 - 5.0 %
▪ Nonionic stabilisers: 0.1-5.0 %
▪ Protector colloid: 0.1 - 5.0%
▪ Rheological agent: 0.4 - 5.0 %
▪ Biocide 0.1-0.5%
▪ pH control agent: 0.1-2.0%
▪ Water: 30 - 60 %

2. A composition in accordance with claim 1, further comprising:
▪ at least one biocide; and
▪ at least one pH control agent.

3. A composition in accordance with claim 1 or 2, wherein the polymer surfactants are selected from polypropylene / polyethylene glycol copolymers.

4. A composition in accordance with any one of the previous claims, wherein the anionic surfactants are selected from sodium salts of sulfonated alkyl chains.

5. A composition in accordance with any one of the previous claims, wherein the nonionic surfactants are selected from ethoxylated fatty alcohols.

6. A composition in accordance with any one of the previous claims wherein the protector colloid is hydroxyethylcellulose.

7. A composition in accordance with any one of the previous claims wherein the rheological agent is a salt derived from vinyl sulfonate.

8. A composition in accordance with any one of the previous claims wherein the coalescing agent is trimethyl pentanediol monoisobutyrate.

9. A composition in accordance with any one of previous claims 2 to 8, wherein the biocide is a combination of BIT (benzyl isothiazolone) and MIT (methyl isothiazolone).

10. A composition in accordance with any of previous claims 2 to 9, wherein the pH control agent is sodium acetate.

11. A composition in accordance with any one of the previous claims, wherein the percentage in weight of the monomers comprising the VeoVa vinyl acrylate terpolymer over the total composition weight are: vinyl acetate: 26-45%; neodecanoic acid ethenyl ester: 2-10%; Methylmethacrylate: 2-10%.

12. Use of a composition in accordance with any one of previous claims 1 to 11 for the stabilisation of soils.

13. Use of a composition in accordance with any one of previous claims 1 to 11 for dust control on any type of terrain or zone that requires this control, such as on roads.

14. Use of a composition in accordance with any one of previous claims 1 to 11 for the control of embankment erosion.

## Patentansprüche

1. Zusammensetzung auf Wasserbasis, umfassend:
▪ ein VeoVa-Vinylacrylat-Terpolymer, das die folgenden drei Arten von Monomeren umfasst: Methylmethacrylat, Neodecansäureethenylester und Vinylacetat;
▪ ein Gemisch aus stabilisierenden Tensiden, das anionische, nicht ionische und Polymertenside umfasst;
▪ zumindest ein Schutzkolloid;
▪ zumindest ein Koaleszenzmittel mit der Absicht, Filmbildung anzuregen; und
▪ zumindest ein rheologisches Mittel;
**gekennzeichnet durch** die folgende Zusammensetzung in Gewichts-%, bezogen auf die Gesamtzusammensetzung:
▪ VeoVa-Vinylacrylat-Terpolymer: 30 bis 65 %
▪ Koaleszenzmittel: 0,5 bis 4,5 %
▪ Polymerstabilisatoren: 0,1 bis 5,0 %
▪ Anionische Stabilisatoren: 0,1 bis 5,0 %
▪ Nicht ionische Stabilisatoren: 0,1 bis 5,0 %
▪ Schutzkolloid: 0,1 bis 5,0 %
▪ Rheologisches Mittel: 0,4 bis 5,0 %
▪ Biozid: 0,1 bis 5,0 %
▪ pH-Kontrollmittel: 0,1 bis 2,0 %
▪ Wasser: 30 bis 60 %

2. Zusammensetzung nach Anspruch 1, weiter umfassend:
▪ zumindest ein Biozid; und
▪ zumindest ein pH-Kontrollmittel.

3. Zusammensetzung nach Anspruch 1 oder 2, wobei die Polymertenside aus Polypropylen/Polyethylenglykol-Copolymeren ausgewählt sind.

4. Zusammensetzung nach einem der vorstehenden Ansprüche, wobei die anionischen Tenside aus Natriumsalzen sulfonierter Alkylketten ausgewählt sind.

5. Zusammensetzung nach einem der vorstehenden Ansprüche, wobei die nicht ionischen Tenside aus ethoxylierten Fettalkoholen ausgewählt sind.

6. Zusammensetzung nach einem der vorstehenden Ansprüche, wobei das Schutzkolloid Hydroxyethylcellulose ist.

7. Zusammensetzung nach einem der vorstehenden Ansprüche, wobei das rheologische Mittel ein von Vinylsulfonat abgeleitetes Salz ist.

8. Zusammensetzung nach einem der vorstehenden Ansprüche, wobei das Koaleszenzmittel Trimethylpentandiolmonoisobutyrat ist.

9. Zusammensetzung nach einem der Ansprüche 2 bis 8, wobei das Biozid eine Kombination aus BIT (Benzylisothiazolon) und MIT (Methylisothiazolon) ist.

10. Zusammensetzung nach einem der Ansprüche 2 bis 9, wobei das pH-Kontrollmittel Natriumacetat ist.

11. Zusammensetzung nach einem der vorstehenden Ansprüche, wobei der Gewichtsprozentanteil der Monomere, die das VeoVa-Vinylacrylat-Terpolymer umfassen, bezogen auf das Gewicht der Gesamtzusammensetzung jeweils wie folgt lautet: Vinylacetat: 26 bis 45 %; Neodecansäureethenylester: 2 bis 10 %; Methylmethacrylat: 2 bis 10 %.

12. Verwendung einer Zusammensetzung nach einem der Ansprüche 1 bis 11 zur Stabilisierung von Böden.

13. Verwendung einer Zusammensetzung nach einem der Ansprüche 1 bis 11 zur Staubeindämmung auf jedweder Art von Gebiet oder Zone, die einer solchen Eindämmung bedarf, etwa auf Straßen.

14. Verwendung einer Zusammensetzung nach einem der Ansprüche 1 bis 11 zur Eindämmung von Deicherosion.

## Revendications

1. Une composition à base d'eau comprenant :
▪ un terpolymère d'acrylate de vinyle VeoVa qui comprend les trois types suivants de monomères : méthacrylate de méthyle, ester d'éthényle d'acide néodécanoïque et acétate de vinyle ;
▪ un mélange d'agents de surface stabilisants comprenant des agents de surface anioniques, non ioniques et de polymère ;
▪ au moins un colloïde de protection ;
▪ au moins un agent de coalescence, destiné à favoriser la formation de film ; et
▪ au moins un agent rhéologique ;
**caractérisée par** la composition suivante, en % en poids par rapport à la totalité de la composition :
▪ Terpolymère d'acrylate de vinyle VeoVa : 30 - 65%
▪ Agents de coalescence : 0,5 - 4,5%
▪ Stabilisants de polymère : 0,1 - 5,0%
▪ Stabilisants anioniques : 0,1 - 5,0%
▪ Stabilisants non ioniques : 0,1 - 5,0%
▪ Colloïde de protection : 0,1 - 5,0%
▪ Agent rhéologique : 0,4 - 5,0%
▪ Biocide : 0,1 - 0,5%
▪ Agent de régulation du pH : 0,1 - 2,0%
▪ Eau : 30 - 60%

2. Une composition selon la revendication 1, comprenant en outre :
▪ au moins un biocide ; et
▪ au moins un agent de régulation du pH.

3. Une composition selon la revendication 1 ou 2, dans laquelle les agents de surface de polymère sont choisis parmi les copolymères polypropylène/polyéthylène glycol.

4. Une composition selon l'une quelconque des revendications précédentes, dans laquelle les agents de surface anioniques sont choisis parmi des sels de sodium de chaînes d'alkyles sulfonés.

5. Une composition selon l'une quelconque des revendications précédentes, dans laquelle les agents de surface non ioniques sont choisis parmi des alcools gras éthoxylés.

6. Une composition selon l'une quelconque des revendications précédentes, dans laquelle le colloïde de protection est l'hydroxyéthylcellulose.

7. Une composition selon l'une quelconque des revendications précédentes, dans laquelle l'agent rhéologique est un sel dérivé de sulfonate de vinyle.

8. Une composition selon l'une quelconque des revendications précédentes, dans laquelle l'agent de coalescence est le monoisobutyrate de trimethylpentanediol.

9. Une composition selon l'une quelconque des revendications précédentes 2 à 8, dans laquelle le biocide est une combinaison de BIT (isothiazolone de benzyle) et de MIT (isothiazolone de méthyle)

10. Une composition selon l'une quelconque des revendications précédentes 2 à 9, dans laquelle l'agent de régulation du pH est l'acétate de sodium.

11. Une composition selon l'une quelconque des revendications précédentes, dans laquelle le pourcentage en poids des monomères comprenant le terpolymère d'acrylate de vinyle VeoVa par rapport au poids de la totalité de la composition sont : acétate de vinyle : 26 - 45% ; ester d'éthényle d'acide néodécanoïque : 2 - 10% ; méthacrylate de méthyle : 2 - 10%.

12. Utilisation d'une composition selon l'une quelconque des revendications précédentes 1 à 11 pour la stabilisation de sols.

13. Utilisation d'une composition selon l'une quelconque des revendications précédentes 1 à 11 pour le contrôle des poussières sur tout type de terrain ou zone nécessitant ce contrôle, comme les routes.

14. Utilisation d'une composition selon l'une quelconque des revendications précédentes 1 à 11 pour le contrôle de l'érosion des digues.
